# EUROPÄISCHE PATENTSCHRIFT

(11) **EP 2 775 215 B1**
(45) Veröffentlichungstag und Bekanntmachung des Hinweises auf die Patenterteilung: **14.03.2018**
(21) Anmeldenummer: 14000158.7
(22) Anmeldetag: 16.01.2014
(51) Int. Cl.: F24C 15/32, F24C 15/20, F24C 7/08

(54) **Backofen mit klimagesteuerter Temperaturbegrenzung**
Baking oven with temperature limitation depending on the climate in the oven
Four de cuisson comprenant une limitation de température dépendant de l'atmosphère dans le four

(30) Priorität: 07.03.2013 CH 560132013
(43) Veröffentlichungstag der Anmeldung: 10.09.2014
(73) Patentinhaber: V-Zug AG, 6301 Zug (CH)
(72) Erfinder: Frey, Ulrich, 8912 Obfelden (CH); Keller, Roy, 8804 Au (CH); Bachofner, Reto Marco, 6362 Stansstad (CH)
(74) Vertreter: Sutter, Kurt

(56) Entgegenhaltungen:
- EP-A1- 1 156 282
- EP-A2- 2 445 311
- WO-A1-2009/049077
- CH-A2- 704 191
- GB-A- 2 142 714
- US-A- 6 060 701

## Beschreibung

### Gebiet der Erfindung

Die Erfindung betrifft einen Backofen mit Garraum und Heizmitteln gemäss Oberbegriff von Anspruch 1.

### Hintergrund

CH 704 191 beschreibt ein Gargerät nach dem Oberbegriff des Anspruchs 1 mit einem Heissluftgenerator, einer Mikrowellenheizung und einem Dampfgenerator. Zudem ist ein Klimasensor umfassend eine Öffnung im Garraum sowie einen ausserhalb der Öffnung angeordneten Temperatursensor vorgesehen. Wenn die Temperatur am Temperatursensor eine Schwelle überschreitet, dann werden die Dampfzugabe sowie die Mikrowellenzugabe reduziert, während der Heissluftgenerator normal weiter betrieben wird. Weiterer relevanter Stand der Technik ist aus den Dokumenten WO 2009/049077 A1, EP 2 445 311 A2 und GB 2 142 714 A bekannt.

### Darstellung der Erfindung

Es stellt sich die Aufgabe, einen Backofen der eingangs genannten Art bereitzustellen, welcher in einfacher Weise aufgebaut ist und dennoch mit geringem Energieverbrauch Speisen garen kann.

Diese Aufgabe wird vom Backofen gemäss Anspruch 1 gelöst. Demgemäss besitzt der Backofen also einen Garraum sowie Heizmittel bestehend aus einer Heissluftheizung und/oder einer Ober- und Unterhitze. Vorzugsweise kann Luft aus dem Garraum mit dem Ventilator den Heizmitteln zugeführt und wieder zurück in den Garraum gefördert werden. Ein erster Temperatursensor dient dem Messen der Garraumtemperatur, und es ist ein Regler zum Steuern der Heizleistung der Heizmittel in einem Regelkreis vorgesehen, der dazu dient, die vom ersten Temperatursensor gemessene Garraumtemperatur auf eine Solltemperatur zu regeln.

Es ist ein Klimasensor vorgesehen, der eine erste Öffnung im Garraum und einen ausserhalb der ersten Öffnung angeordneten zweiten Temperatursensor umfasst. Mit anderen Worten ist der zweite Temperatursensor also so angeordnet, dass aus dem Garraum austretende Luft zunächst die erste Öffnung und sodann erst den zweiten Temperatursensor passiert.

Weiter besitzt der Backofen einen Thermostaten, wobei der zweite Temperatursensor Teil dieses Thermostaten bildet. Mit dem Thermostaten wird die Heizleistung der Heizmittel automatisch unter den vom Regler vorgegebenen Wert abgesenkt, wenn die Temperatur am zweiten Temperatursensor eine Schwelltemperatur überschreitet, derart dass die Garraumtemperatur unter die Solltemperatur absinkt.

Auf diese Weise kann das Signal des Klimasensors in sehr einfacher Weise zur Gerätesteuerung eingesetzt werden. Wenn die Temperatur beim zweiten Temperatursensor über die Schwelltemperatur ansteigt, ist dies ein Zeichen dafür, dass relativ viel Dampf aus dem Gargut austritt. Um in diesem Falle einen unnötigen Energieverlust zu vermeiden, wird die Heizleistung der Heizmittel reduziert, vorzugsweise bis die Temperatur am zweiten Temperatursensor wieder absinkt. Auf diese Weise kann das Gargut mit geringem Energieaufwand am Kochen oder Sieden gehalten werden.

In einer besonders einfach zu realisierenden Ausführung weist der genannte Thermostat einen Schalter auf, der den Strom vom Regler zu den Heizmitteln solange automatisch unterbricht, wie die Temperatur am zweiten Temperatursensor die Schwelltemperatur unterschreitet.

### Kurze Beschreibung der Zeichnung

Weitere Ausgestaltungen, Vorteile und Anwendungen der Erfindung ergeben sich aus den abhängigen Ansprüchen und aus der nun folgenden Beschreibung anhand der Figur. Diese zeigt einen schematischen Schnitt durch einen Backofen.

### Wege zur Ausführung der Erfindung

### Übersicht:

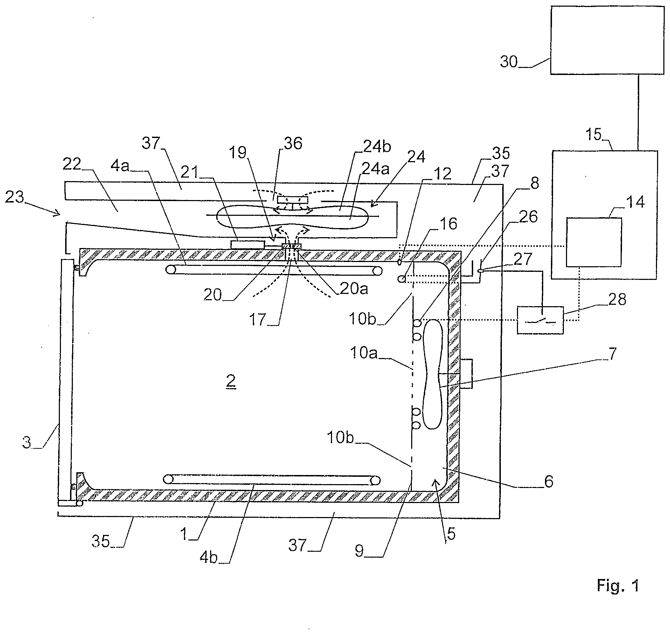

Fig. 1 zeigt einen Schnitt durch einen Backofen. Ersichtlich ist die Muffel 1, welche den Garraum 2 zur Aufnahme des Garguts bildet. Die Muffel 1 ist in einem Gehäuse 35 angeordnet. An seiner Vorderseite ist der Garraum 2 von einer Türe 3 geschlossen, über welche der Benutzer Zugang zum Garraum 2 hat. Zum Heizen des Garraums 2 sind Heizmittel mit resistiven Heizelementen vorgesehen, in der vorliegenden Ausführung eine Ober- und Unterhitze 4a, 4b sowie eine Heissluftheizung 5. Die Heissluftheizung 5 ist in einer Heizkammer 6 an der Rückseite des Garraums 2 angeordnet und umfasst einen Ventilator 7, der als Radiallüfter ausgestaltet ist, sowie ein resistives Heizelement in Form einer Heizschlange 8. In der Wand 9 zwischen dem Garraum 2 und der Heizkammer 6 sind Durchbrüche 10a und 10b angeordnet. Durch die Durchbrüche 10a, die radial innerhalb des Ventilators 7 angeordnet sind, kann Luft aus dem Garraum 2 angesaugt werden. Diese Luft wird sodann dem Heizelement 8 erwärmt und danach über die Durchbrüche 10b, welche radial ausserhalb des Ventilators 7 angeordnet sind, wieder in den Garraum 2 zurückgeführt.

Am oder im Garraum 2 ist ein erster Temperatursensor 12 vorgesehen, mit dem die Garraumtemperatur, d.h. die Temperatur im Garraum 2, gemessen wird. Er ist mit einem Regler 14 der elektronischen und/oder mechanischen Gerätesteuerung 15 verbunden, mit dem die Garraumtemperatur - in einem aus dem ersten Temperatursensor 12, dem Regler 14 und der Heissluftheizung bestehenden Regelkreis - auf einen Sollwert geregelt werden kann. Hierzu steuert der Regelkreis 14 die Heizleistung des Heizelements 8 der Heissluftheizung 5. Je nach Programmwahl kann mit dem Regler 14 auch die Heizleistung der Ober- und Unterhitze 4a, 4b geregelt werden.

Weiter sind am Garraum 2 eine erste Öffnung 16 und eine zweite Öffnung 17 angeordnet. Die erste Öffnung 16, welche in der dargestellten Ausführung an einer Seitenwand des Garraums 2 angeordnet ist, bildet Teil eines weiter unten beschriebenen Klimasensors 18, während die zweite Öffnung 17, welche in der dargestellten Ausführung an der Decke des Garraums 2 angeordnet ist, dazu dient, in gewissen Betriebsprogrammen Luft aus dem Garraum 2 abzuleiten.

Die zweite Öffnung 17 kann mit einem von der Gerätesteuerung 15 gesteuerten Verschlussmechanismus 19 teilweise verschlossen werden. Der Verschlussmechanismus 19 kann z.B. eine Klappe oder einen Schieber 20 aufweisen, der von einem Antrieb 21 über die zweite Öffnung 17 geführt werden kann. In der Klappe bzw. dem Schieber 20 ist ein kleiner Durchgang 20a von z.B. 8 mm Durchmesser vorgesehen, so dass die zweite Öffnung 17 auch bei geschlossenem Schieber 20 nicht vollständig blockiert ist, damit mit der weiter unten beschriebenen Lüfteranordnung 24 immer ein gewisser Unterdruck im Garraum 2 aufrecht erhalten werden kann. solange das Gargut nicht ausgast.

Über der Muffel 1 ist ein Abluftkanal 22 vorgesehen, der über eine Mündung 23 z.B. an der Vorderseite des Geräts mit der Umgebung kommuniziert. Im Abluftkanal 22 ist eine Lüfteranordnung 24 angeordnet, welche im dargestellten Ausführungsbeispiel als Radiallüfter mit zwei Kammern 24a, 24b ausgestaltet ist. Die untere Kammer 24a saugt Luft aus dem Garraum 2 an, und zwar dank dem Durchgang 20a bei geschlossenem Verschlussmechanismus 19. Die obere Kammer 24b saugt durch eine Öffnung 36 Luft aus einem Zwischenraum 37 an, der zwischen der Muffel 1 und dem Gehäuse 35 ausgebildet ist, und erzeugt so dort einen Luftstrom, der die Wände des Gehäuses 35 kühlt.

Die Lüfteranordnung 24 ist so ausgelegt, dass - ohne Gargut, welches Dampf abgeben könnte - der Druck p1 im Garraum 2 geringer ist als der Druck p2 im Zwischenraum 37, selbst wenn sich der Schieber 20 in seiner geschlossenen Stellung befindet.

Der erwähnte Klimasensor 18 umfasst eine Rohrleitung 26, über welche die erste Öffnung 16 mit dem Zwischenraum 37 verbunden ist. In oder an der Rohrleitung 26 ist ein zweiter Temperatursensor 27 angeordnet, um die Temperatur an einer Stelle der Rohrleitung 26 zu messen.

Der zweite Temperatursensor 27 ist Teil eines Thermostaten, mit welchem die Heizleistung der Heissluftheizung 5 unter einen vom Regler 14 vorgegebenen Wert abgesenkt werden kann, wenn die Temperatur am zweiten Temperatursensor 27 eine Schwelltemperatur Ts überschreitet. In der dargestellten Ausführung umfasst dieser Thermostat weiter einen Schalter 28, der unterbrochen wird, sobald die Temperatur am zweiten Temperatursensor 27 über der genannten Schwelltemperatur Ts liegt.

Die Schwelltemperatur Ts liegt vorteilhaft in einem Bereich zwischen 60°C und 90°C, insbesondere zwischen 65°C und 75°C, so dass eine frühzeitige Erkennung von austretendem Dampf und eine Reduktion der Heizleistung möglich ist.

Der Schalter 28 kann auch als Teil des Reglers 14 bzw. der Steuerung 15 ausgestaltet sein, in welchem Falle der zweite Temperatursensor 27 direkt mit dem Regler 14 bzw. der Steuerung 15 verbunden wird.

Der Backofen umfasst weiter Eingabemittel 30, über welche der Benutzer der Steuerung 15 mitteilen kann, was für ein Garprogramm ausgeführt werden soll. Es sind mehrere Garprogramme vorgesehen, von denen einige das Gerät in konventioneller Weise betreiben.

### Betrieb des Geräts:

Mindestens eines der vom Benutzer über die Eingabemittel 30 auswählbaren Garprogramme ist ein Programm zum energieeffizienten Garen unter feuchter Umgebung. Im Folgenden wird der Programmablauf für dieses Garprogramm genauer beschrieben. Die Schritte dieses Programmablaufs werden von der Gerätesteuerung 15 gesteuert.

Zunächst wird der Garraum 2 mit Hilfe der Heissluftheizung 5 (und allenfalls unter Zuhilfenahme der Ober- und Unterhitze 4a bzw. 4b) aufgeheizt und seine Temperatur wird mit dem Regler 14 auf die z.B. vom Benutzer vorgegebene Solltemperatur geregelt. Die Klappe bzw. der Schieber 20 an der zweiten Öffnung 17 ist während des Ablaufs dieses Garprogramms verschlossen oder wird allenfalls zeitlich gesteuert nach Ablauf einer gewissen Zeit geöffnet. Der Lüfter 24 ist in Betrieb.

Das Gargut im Garraum 2 erwärmt sich. Beginnt aus dem Gargut Dampf auszutreten, erhöht sich der Luftdruck p1 im Garraum 2. Ist dieser grösser als der Druck p2 im Zwischenraum 37, so beginnt heisse, feuchte Luft durch die Rohrleitung 26 zu fliessen, worauf die Temperatur am zweiten Temperatursensor 27 über die Schwelltemperatur Ts ansteigt. Sobald und solange dies der Fall ist, wird die Zufuhr von Heizleistung zur Heissluftheizung 5 unterbrochen, worauf die Temperatur im Garraum 2 wieder abzusinken beginnt, bis der Dampfaustritt aus dem Gargut soweit reduziert wird, dass die Temperatur beim zweiten Temperatursensor 27 wieder unter die Schwelltemperatur Ts absinkt, worauf wieder die Garraumtemperatur 2 geregelt wird.

Auf diese Weise kann das Gargut mit minimalem Energieaufwand am Kochen oder Sieden gehalten werden.

### Bemerkungen:

Der zweite Temperatursensor 27 befindet sich an einer Leitung, welche die erste Öffnung 16 direkt oder indirekt mit der Umgebung verbindet.

In der Ausführung nach Fig. 1 mündet die von der ersten Öffnung 16 ausgehende Leitung 26 im Zwischenraum 37, so dass die Temperatur am zweiten Temperatursensor 27 erst dann ansteigt, wenn im Garraum 2 ein höherer Druck herrscht als im Zwischenraum 37. Es ist jedoch auch denkbar, dass die Leitung 26 mit einem anderen Bereich des Geräts oder mit einem Bereich der Umgebung kommuniziert, in welchem (ohne ausgasendes Gargut) im Betrieb des Geräts ein etwas höherer Druck herrscht als im Garraum 2, insbesondere ein um mindestens 0.1 Pa, insbesondere um mindestens 3 Pa höherer Druck.

Wie erwähnt, ist die Klappe oder der Schieber 20 bei der zweiten Öffnung 17 im oben erwähnten Garverfahren normalerweise geschlossen, oder sie kann zeitgesteuert nach Ablauf einer gewissen Zeit geöffnet werden. Ein derartiges zeitgesteuertes Öffnen hat den Vorteil, dass, falls der Thermostat aus irgend einem Grunde trotz starker Dampferzeugung im Garraum 2 nicht anspricht, auf jeden Fall eine Entlüftung des Garraums 2 einsetzt, um aus diesem Feuchtigkeit auszutragen.

In der Ausführung nach Fig. 1 wird die Energiezufuhr zur Heissluftheizung 5 vollständig unterbrochen, wenn die Temperatur am zweiten Temperatursensor 27 über die Schwelltemperatur Ts ansteigt. Denkbar ist jedoch auch, dass die Energiezufuhr lediglich etwas reduziert, nicht aber völlig unterbrochen wird.

Weiter kann mit dem Regler 14 anstelle (oder zusätzlich zu) der Heissluftheizung auch die Ober- und/oder Unterhitze 4a, 4b gesteuert werden. In diesem Falle wird die Heizleistung Ober- und/oder Unterhitze 4a, 4b reduziert, wenn die Temperatur am zweiten Temperatursensor 27 über die Schwelltemperatur Ts ansteigt.

## Patentansprüche

1. Backofen umfassend
einen Garraum (2),
Heizmitteln (4a, 4b; 5) bestehend aus einer Heissluftheizung (5) und/oder einer Ober- und Unterhitze (4a, 4b),
einen ersten Temperatursensor (12) zum Messen einer Garraumtemperatur,
einen Regler (14) zum Steuern einer Heizleistung der Heizmittel (4a, 4b; 5) zwecks Regelung der Garraumtemperatur auf eine Solltemperatur und
einen Klimasensor (18) umfassend eine erste Öffnung (16) im Garraum (2) und einen ausserhalb der ersten Öffnung (16) angeordneten zweiten Temperatursensor (27),
**dadurch gekennzeichnet, dass** der Backofen einen Thermostaten (27, 28) umfassend den zweiten Temperatursensor (27) aufweist, wobei der Backofen dazu ausgestaltet ist, mit dem Thermostaten die Heizleistung der Heizmittel (4a, 4b; 5) automatisch unter einen vom Regler (14) vorgegebenen Wert abzusenken, wenn die Temperatur am zweiten Temperatursensor (27) eine Schwelltemperatur überschreitet, derart dass die Garraumtemperatur unter die Solltemperatur absinkt.

2. Backofen nach Anspruch 1, wobei mit dem Thermostaten (27, 28) die Heizleistung der Heizmittel (4a, 4b; 5) automatisch solange unter den vom Regler (14) vorgegebenen Wert absenkbar ist, wie die Temperatur am zweiten Temperatursensor (27) über der Schwelltemperatur liegt.

3. Backofen nach einem der vorangehenden Ansprüche, weiter umfassend
eine den Garraum (2) umschliessende Muffel (1),
ein Gehäuse (35), in welchem die Muffel (1) angeordnet ist,
einen Zwischenraum (37) zwischen der Muffel (1) und dem Gehäuse (35),
einer Lüfteranordnung (24), mit der Luft aus dem Garraum (2) und dem Zwischenraum (37) ansaugbar ist, wobei die Lüfteranordnung (24) derart dimensioniert ist, dass sie, ohne Gargut im Garraum (2), einen tieferen Druck im Garraum (2) erzeugt als im Zwischenraum (37),
wobei die erste Öffnung (16) über eine Leitung (26) mit dem Zwischenraum (37) verbunden ist, wobei der zweite Temperatursensor (27) an der Leitung (26) angeordnet ist.

4. Backofen nach Anspruch 3,
mit einer zweiten Öffnung (17), durch welche mit der Lüfteranordnung (24) Luft aus dem Garraum (2) ansaugbar ist und
mit einem von einer Gerätesteuerung (15) gesteuerten Verschlussmechanismus (19) zum teilweisen Verschliessen und Öffnen der zweiten Öffnung (17).

5. Backofen nach Anspruch 4, wobei mit der Lüfteranordnung (24) auch bei geschlossenem Verschlussmechanismus (19) Luft aus dem Garraum ansaugbar ist.

6. Backofen nach einem der Ansprüche 4 oder 5, wobei der Verschlussmechanismus (19) eine Klappe oder einen Schieber (20) aufweist, wobei in der Klappe oder dem Schieber (20) ein Durchgang (20a) vorgesehen ist, derart dass die zweite Öffnung (17) auch bei geschlossener Klappe bzw. geschlossenem Schieber (20) nicht vollständig blockiert ist.

7. Backofen nach einem der vorangehenden Ansprüche, wobei der Thermostat (27, 28) einen Schalter (28) aufweist, welcher einen Strom vom Regler (14) zu den Heizmitteln (4a, 4b; 5) solange unterbricht, bis die Temperatur am zweiten Temperatursensor (27) die Schwelltemperatur unterschreitet.

8. Backofen nach einem der vorangehenden Ansprüche, wobei die Schwelltemperatur zwischen 60°C und 90°C liegt.

9. Backofen nach einem der vorangehenden Ansprüche, wobei die Schwelltemperatur zwischen 65°C und 75°C liegt.

10. Backofen nach einem der vorangehenden Ansprüche, wobei die Heizmittel eine Heissluftheizung (5) aufweisen, wobei die Heissluftheizung (5) ein Ventilator (7) und ein Heizelement (8) ausserhalb des Garraums (2) aufweist, wobei Luft aus dem Garraum (2) mit dem Ventilator (7) dem Heizelement (8) zuführbar und zurück in den Garraum (2) förderbar ist.

## Claims

1. Baking oven comprising
a cooking chamber (3),
a heating arrangement (4a, 4b; 5) consisting of a hot air heater (5) and/or a top and bottom heater (4a, 4b),
a first temperature sensor (12) for measuring a temperature in the cooking chamber,
a feedback loop (14) for setting a heating power of the heating arrangement (4a, 4b; 5) in order to maintain the temperature in the cooking chamber (3) at a desired temperature, and
a climate sensor (18) comprising a first opening (16) in the cooking chamber (2) and a second temperature sensor (27) arranged outside the first opening (16),
wherein the baking oven comprises a thermostat (27, 28) comprising the second temperature sensor (27) and adapted and structured to automatically set the heating power of the heating arrangement (4a, 4b; 5) to a value below the value given by the feedback loop (14) if the temperature at the second temperature sensor (27) exceeds a threshold temperature, such that the temperature in the cooking chamber falls below the desired temperature.

2. Baking oven of claim 1 wherein the thermostat (27, 28) automatically keeps the heating power of the heating arrangement (4a, 4b; 5) below the value given by the feedback loop (14) as long as the temperature at the second temperature sensor (27) is above the threshold temperature.

3. The oven of any of the preceding claims further comprising
an enclosure (1) enclosing the cooking chamber (2),
a housing (35) enclosing the enclosure (1),
a space (37) between the enclosure (1) and the housing (35),
a blower (24) for sucking air from said cooking chamber (2) and the space (37), wherein the blower (24) is structured to generate, in the absence of foodstuff in the cooking chamber, a lower pressure in said cooking chamber (2) than in said space (37),
wherein the first opening (16) is connected to said space (37) by means of a duct (26), and wherein said second temperature sensor (27) is arranged at said duct (26).

4. Baking oven of claim 3 with
a second opening (17), through which air from the cooking chamber (2) I sucked by the blower (24), and
a closing mechanism (19) for partially closing and opening said second opening (17), wherein said closing mechanism (19) is controlled by said control unit (15).

5. Baking oven of claim 4 wherein the blower (24) is adapted to suck air from said cooking chamber (2) also when said closing mechanism is in a closed state.

6. Baking oven of any of the claims 4 or 5, wherein the closing mechanism (1) comprises a pivoting door or a sliding door (20), wherein the door (20) comprises a passage (20a) such that the second opening (17) is not fully closed even if said door (20) is in a closed position.

7. Baking oven of any of the preceding claims wherein said thermostat (27, 28) comprises a switch (28) that interrupts an electrical current from the feedback loop (14) to the heating arrangement (4a, 4b; 5) until the temperature at said second temperature sensor (27) falls below said threshold temperature.

8. Baking oven of any of the preceding claims wherein said threshold temperature is between 65°C and 90°C.

9. Baking oven of any of the preceding claims wherein said threshold temperature is between 65°C and 75°C.

10. Baking oven of any of the preceding claims wherein the heating arrangement comprises a hot air heater (5), wherein said hot air heater (5) comprises a fan (7) and a heater (8) outside said cooking chamber (2), wherein said fan (7) is adapted to suck air from said cooking chamber (2), feed said air to said heater (8) and feed said air back to the cooking chamber (2).

## Revendications

1. Four comprenant
une chambre de cuisson (3),
des moyens de chauffage (4a, 4b; 5) consistant d'un radiateur d'air chaud (5) et/ou un radiateur supérieur et un radiateur inférieur (4a, 4b),
un premier capteur de température (12) pour mesurer une température dans la chambre de cuisson,
un régulateur (14) pour ajuster une puissance de chauffage des moyens de chauffage (4a, 4b; 5) afin de maintenir la température dans la chambre de cuisson (3) à une température souhaitée, et
un capteur climatique (18) comprenant une première ouverture (16) dans la chambre de cuisson (2) et un deuxième capteur de température (27) arrangé à l'extérieur de la première ouverture (16),
le four comprenant un thermostat (27, 28) comprenant un deuxième capteur de température (27) et adapté et structuré à fixer de manière automatique une valeur de la puissance de chauffage des moyens de chauffage (4a, 4b; 5) au-dessous de la valeur donnée par le régulateur (14) si la température au deuxième capteur de température (27) dépasse une température de seuil, de sorte que la température dans la chambre de cuisson tombe au-dessous de la température souhaitée.

2. Four selon la revendication 1, le thermostat (27, 28) gardant la puissance de chauffage des moyens de chauffage (4a, 4b; 5) de manière automatique au-dessous de la valeur donnée par le régulateur (14) aussi longtemps que la température au deuxième capteur de température (27) est au-dessus de la température de seuil.

3. Four selon l'une des revendications précédentes, comprenant en outre
une enveloppe (1) qui entoure la chambre de cuisson (2),
une carcasse (35) qui entoure l'enveloppe (1),
un espace (37) entre l'enveloppe (1) et la carcasse (35),
un souffleur (24) pour aspirer d'air de ladite chambre de cuisson (2) et l'espace (37), le souffleur (24) étant structuré à générer une pression plus basse dans ladite chambre de cuisson (2) que dans ledit espace (37) dans l'absence des aliments dans la chambre de cuisson,
la première ouverture (16) étant connectée audit espace (37) à l'aide d'un tuyau (26), et ledit deuxième capteur de température (27) étant arrangé audit tuyau (26).

4. Four selon la revendication 3, avec
une deuxième ouverture (17), à travers laquelle d'air de la chambre de cuisson (2) est aspiré par le souffleur (24), et
un mécanisme de fermeture (19) pour partiellement fermer et ouvrir ladite deuxième ouverture (17), ledit mécanisme de fermeture (19) étant commandé par ladite unité (15).

5. Four selon la revendication 4, le souffleur (24) étant adapté à aspirer d'air de ladite chambre de cuisson (2) également quand ledit mécanisme de fermeture est dans un état fermé.

6. Four selon l'une des revendications 4 ou 5, le mécanisme de fermeture (1) comprenant une porte pivotable ou une porte glissante (20), la porte (20) comprenant un passage (20a) de sorte que la deuxième ouverture (17) n'est pas entièrement fermée même si ladite porte (20) est dans une position fermée.

7. Four selon l'une des revendications précédentes, ledit thermostat (27, 28) comprenant un interrupteur (28) qui interrompe un courant électrique du régulateur (14) aux moyens de chauffage (4a, 4b; 5) jusqu'à la température audit deuxième capteur de température (27) tombe au-dessous de ladite température de seuil.

8. Four selon l'une des revendications précédentes, ladite température de seuil étant comprise entre 60°C et 90°C.

9. Four selon l'une des revendications précédentes, ladite température de seuil étant comprise entre 65°C et 75°C.

10. Four selon l'une des revendications précédentes, les moyens de chauffage comprenant un radiateur d'air chaud (5), ledit radiateur d'air chaud (5) comprenant un ventilateur (7) et un chauffage (8) à l'extérieur de ladite chambre de cuisson (2), ledit ventilateur (7) étant adapté à aspirer d'air de ladite chambre de cuisson (2), d'alimenter ledit air audit chauffage (8) et d'alimenter ledit air de nouveau dans la chambre de cuisson (2).
